# EUROPEAN PATENT SPECIFICATION

(11) **EP 3 493 014 B1**
(45) Date of publication and mention of the grant of the patent: **15.09.2021**
(21) Application number: 18212152.5
(22) Date of filing: 23.07.2014
(51) Int. Cl.: G05D 1/02

(54) **LAWN MOWER ROBOT AND METHOD OF CONTROLLING THE SAME**
RASENMÄHROBOTER UND VERFAHREN ZUR STEUERUNG DES RASENMÄHROBOTERS
TONDEUSE À GAZON ROBOTISÉE ET PROCÉDÉ DE COMMANDE ASSOCIÉ

(30) Priority: 29.01.2014 KR 20140011043
(43) Date of publication of application: 05.06.2019
(62) Divisional of application: 14178164.1
(73) Proprietor: LG Electronics Inc., Seoul 07336 (KR)
(72) Inventor: CHOI, Kyuchun, 153-802 Seoul (KR); WOO, Hanwool, 153-802 Seoul (KR); PARK, Jongil, 153-802 Seoul (KR)
(74) Representative: Vossius & Partner Patentanwälte Rechtsanwälte mbB

(56) References cited:
- WO-A1-99/59042
- WO-A1-2011/057153
- US-A1- 2013 041 526

## Description

The present invention relates to a lawn mower robot and a method of controlling the same, and more particularly, to a lawn mower robot a main body of which may be efficiently driven within a region, and a method of controlling the same.

A lawn mower is an apparatus for mowing a lawn planted in a home's yard, a playground, or the like. Such a lawn mower is classified into a home type and a tractor type used in a wide playground or farm.

The lawn mower for home is classified into a walk behind type for mowing the lawn while a person directly drags the lawn mower from behind and a directly hand carrying type.

However, there are burdens in that persons should directly operate all of two types of lawn mowers.

Particularly, since it is difficult to mow the lawn of the yard by directly operating the lawn mower by a user in today's busy daily life, it is usual to hire outside persons for mowing the lawn, to thereby generate hiring costs.

Accordingly, an automatic robot type lawn mower has been developed in order to prevent generation of additional costs and reduce a user's burden. Many studies have been carried out in order to control moving performance of the automatic robot type lawn mower.

US 2013/041526 A1 relates to a smart robotic lawn mowing system utilizing ultrasonic and RF sensors installed on the mower base and stands to define the mowing region, to track the position of the robotic lawn mower base, and to control and monitor the mowing routs.

WO 99/59042 A1 relates to a method of mapping an operation area by a team of a human and a mobile robot including the steps of defining a graph representing the area by a human, guiding the robot by human along an edge, stopping at a vertex in the graph by the team, creating a vertex record if stopped at a new vertex, localizing the robot and vertices if stopped at an existing vertex, creating an edge record if finished a new edge, and outputting an area's map including a set of vertex records and a set of edge records by the robot.

Accordingly, the present invention is directed to a lawn mower robot and a method of controlling the same that substantially obviates one or more problems due to limitations and disadvantages of the related art.

An object of the present invention is to provide a lawn mower robot and a method of controlling the same.

This object is achieved with the features of the independent claims. The dependent claims relate to aspect of the invention.

Another object of the present invention is to provide a lawn mower robot a main body of which may be efficiently driven in an overall region to thereby minimize a non-driving region, and a method of controlling the same

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a lawn mower robot includes acquiring coordinate information of a boundary indication unit defining an operation region, deriving an imaginary quadrangle having the operation region, determining coordinate points of the boundary indication unit which are respectively close to four vertexes of the quadrangle as four specific points, and allowing a main body to be driven inside the operation region through pattern driving after beginning from any one of the four specific points, and after completing first pattern driving from one of the four specific points to another point of the four specific points, directing the main main body to to move to an other one of the four specific points and perform a further pattern driving from the other one of the four specific points. The boundary indication unit preferably comprises a boundary wire defining the operation region.

In a further aspect of the present invention, a lawn mower robot is configured to be operated in an operation region defined by a boundary indication unit, and includes a main body configured for moving inside the operation region defined by the boundary indication unit, wherein the main body includes a sensing portion which is configured to sense the boundary of the operation region, a drive portion which is configured to drive the robot to move along the boundary and then realize pattern driving, and a controller which is configured to derives an imaginary quadrangle having the operation region by means of using coordinate information of the boundary acquired by the movement made by the drive portion, determine coordinate points of the boundary respectively close to four vertexes of the quadrangle as four specific points, and allow the drive portion to perform pattern driving by selecting any one of the four specific points.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a top view illustrating a main body of a lawn mower robot according to an embodiment of the present invention;
FIG. 2 is a block diagram of the lawn mower robot in FIG. 1;
FIG. 3 is a control flowchart;
FIG. 4 is a view for explaining a process of deriving an imaginary quadrangle;
FIG. 5 is a view for explanation of driving;
FIG. 6 is a flowchart for explaining a correction process on determination of a specific point;
FIGs. 7 and 8 are views for explaining realization of the correction process in FIG. 6; and
FIG. 9 is a view for explaining an obstacle avoidance driving method.

Reference will now be made in detail to the preferred embodiments of the present invention, examples of which are illustrated in the accompanying drawings.

In the description, the size or shape of each component illustrated in the drawings may be exaggerated for convenience of description and clarity. In addition, terms defined in consideration of configurations and functions of the present invention may vary with the intention or practice of a user or an operator. Therefore, such terms should be defined based on the entire content disclosed herein.

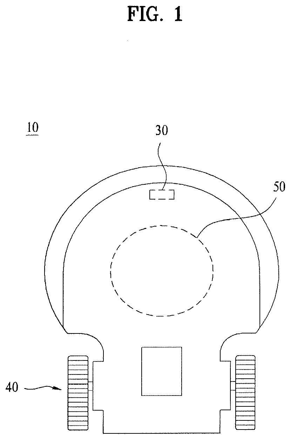

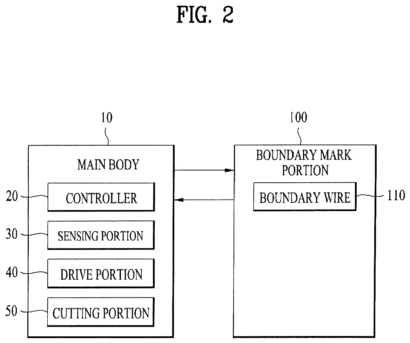

FIG. 1 is a top view illustrating a main body of a lawn mower robot according to an embodiment of the present invention. FIG. 2 is a block diagram of the lawn mower robot in FIG. 1. Hereinafter, a description will be given with reference to FIGs. 1 and 2.

The lawn mower robot may include a main body 10 movable to cut a lawn and a boundary mark portion 100 defining an operation region in which the main body 10 operates during movement thereof.

The boundary mark portion 100 includes a boundary wire 110 defining a boundary of the operation region and may include a station capable of supplying current to the boundary wire 110. That is, the boundary 110 may be connected to the station so as to generate electromagnetic waves by the current supplied from the station.

The main body 10 of the lawn mower robot may include a cutting portion 50 capable of cutting a lawn. The cutting portion 50 may have sharp blades configured to be rotatable.

The main body 10 includes a drive portion 40 which may move and rotate the main body 10 in a desired direction. The drive portion 40 may include a plurality of rotatable wheels each of which may be individually rotated, so that the main body 10 may be rotated in a desired direction.

The main body 10 may include a sensing portion 30 which may sense the boundary wire 110. The sensing portion 30 senses electromagnetic waves generated by the current flowing in the boundary wire 110, thereby being capable of acquiring information about whether the main body 10 reaches the boundary wire 110, whether the main body 10 is present within a closed curved surface formed by the boundary wire 110, whether the main body 10 is driven along the boundary wire 110, and the like.

In addition, the sensing portion 30 may also sense various sorts of information about movement distance, movement speed, position change relative to movement of the main body 10, and the like.

The main body 10 may drive the drive portion 40 using the information sensed by the sensing portion 30. That is, a controller 20 may control driving of the main body 10 using the information sensed by the sensing portion 30. In addition, the controller 20 may also establish a map of the operation region defined by the boundary wire 110 by acquiring coordinate information according to a movement trajectory of the main body 10 while the main body 10 moves along the boundary wire 110.

In particular, the controller 20 may set a starting point from which the main body 10 moves before beginning to operate by means of the coordinate information of the operation region. The controller 20 may control the drive portion 40 such that the main body 10 moves to the starting point.

In addition, the controller 20 may allow the cutting portion 50 to be driven after the main body 10 moves to the operation starting point, so that the cutting portion 50 begins to mow the lawn.

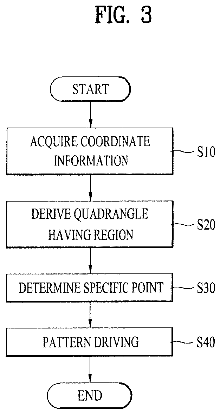

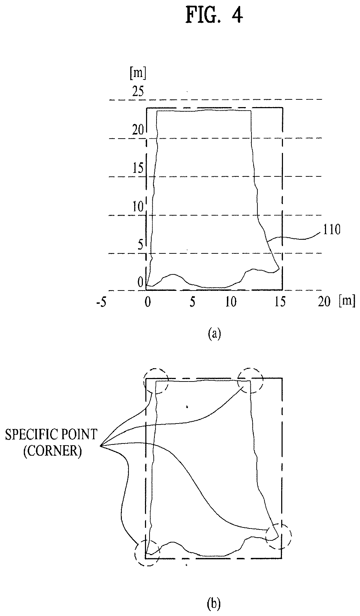

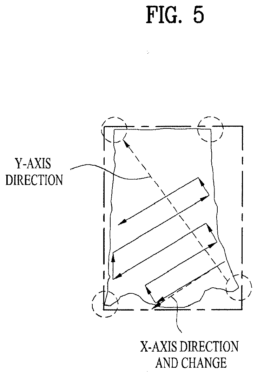

FIG. 3 is a control flowchart. FIG. 4 is a view for explaining a process of deriving an imaginary quadrangle. FIG. 5 is a view for explanation of driving. Hereinafter, a description will be given with reference to FIGs. 3 to 5.

For reference, the operation region defined by the boundary wire is indicated by a solid line and the imaginary quadrangle is indicated by a dotted line, in FIG. 4.

A user may install the boundary wire 110 in a desired yard to be operated. In this case, the boundary wire 110 may be connected to the station so as to supply current to the boundary wire 110. In this case, electromagnetic waves may be generated from the boundary wire 110 by the current supplied.

After the main body 10 moves toward the boundary wire 110, the main body 10 may acquire coordinate information of the operation region while moving along the boundary wire 110 (S10). That is, when the main body 10 arbitrarily reaches the boundary wire 110, the sensing portion 30 may sense that the main body 10 reaches the boundary wire 110. Subsequently, the controller 20 instructs the drive portion 40 to be driven along the boundary wire 110, and then the main boy 10 acquires the coordinate information of the boundary wire 110 by the movement trajectory of the main body 10.

In a case in which the main body 10 is driven in order to obtain the information of the boundary wire 110, namely the information of the operation region, the main body 10 is driven in the form similar to the closed curved surface formed by the boundary wire 110.

The controller 20 may establish the map of the operation region with respect to the movement trajectory of the main body 10 by means of information about the number of rotation of the wheel of the drive portion 40, the movement angle of the main body 10, and the like.

That is, the station may collect coordinates of the boundary wire 110 in a dead-reckoning manner by using heading angle information and odometry information as an origin of the coordinates. Accordingly, the present invention may reduce cost because equipment capable of acquiring coordinates using information from external devices such as GPS is not used.

The imaginary quadrangle including the operation region may be derived (S20).

The imaginary quadrangle (indicated by a dotted line) shown in FIG. 4 includes the overall operation region (indicated by a solid line) defined by the boundary wire 110.

In addition, the imaginary quadrangle is preferably a rectangle. The rectangle has four vertexes, has two sides which are at right angles to each other on the basis of each vertex, and is simple compared to other quadrangles. Therefore, it may be possible to reduce time taken when the imaginary quadrangle is selected.

The derived imaginary quadrangle is preferably configured such that an area difference between the imaginary quadrangle and the operation region is small. It is preferably to select the imaginary quadrangle such that an area difference between the closed curved surface of the operation region and the imaginary quadrangle may be minimized.

It may be possible to form the outermost quadrangle which includes an overall operation region as shown in FIG. 4 using the coordinate information collected in step S10. The outermost quadrangle having the smallest area difference may be determined as the final outermost quadrangle (imaginary quadrangle) by obtaining an area difference between the overall operation region and the outermost quadrangle and rotating the coordinates to perform the same operation.

Meanwhile, after the imaginary quadrangle is derived, coordinate points of the boundary wire 110 which are respectively close to the four quadrangular vertexes are determined as four specific points (S30).

That is, a coordinate value of the boundary wire 110 which is closest to each vertex of, and preferably a respective side of, the determined imaginary quadrangle as shown in FIG. 4(b) is obtained and thus the coordinate value is determined as a specific point (corner) of the region. Since the quadrangle has four vertexes, four specific points may be defined.

When the specific points are determined, the main body 10 moves to any one of the four specific points and begins to be driven (S40).

In order for the main body 10 to move to one specific point from a current position, the main body 10 may directly move to a position of the specific point, and moreover, the main body 10 may move to the specific point along the boundary wire 110 after reaching the boundary wire 110 from the current position. Since the boundary wire 110 may continuously generate signals sensed by the sensing portion 30, the boundary wire 110 may guide the main body 10 such that the main body 10 may easily move to a desired position.

In this case, the main body 10 may be driven within the operation through pattern driving from the specific points. The pattern driving may mean that a diagonal direction joining two specific points is set as a central axis and the main body is driven about the central axis in a zigzag direction, or preferably in a zigzag-like direction wherein the main body 10 is driven along substantially parallel paths.

As shown in FIG. 5, the main body may move toward the other specific point located in the diagonal direction of the quadrangle from any one of four specific points, and may be driven so as to repeatedly move in the left and right directions at a predetermined angle about the diagonal direction, preferably at a vertical angle.

In FIG. 5, a first specific point, a third specific point, a second specific point, and a fourth specific point may be sequentially arranged in a clockwise direction.

The main body 10 may move from the first specific point to the second specific point among the four specific points. In this case, the first and second specific points are not positioned adjacent to each other and are arranged to face each other in the diagonal direction.

When the main body 10 reaches the second specific point, it may be determined that driving of the main body 10 moving from the first specific point to the second specific point is completed. Accordingly, the main body 10 moves to the third specific point and the pattern driving of the main body 10 moving from the third specific point to the fourth specific point may be performed. In this case, when the main body 10 moves from the second specific point to the third specific point, the main body 10 may move along the boundary wire 110.

Meanwhile, a movement direction from the first specific point to the second specific point may be defined as a forward diagonal direction and a movement direction from the second specific point to the first specific point may be defined as a reverse diagonal direction.

In the course of the main body 10 moving in the forward diagonal direction from the first specific point to the second specific point, when the main body 10 reaches the boundary wire 110 or the second specific point, it may be determined that the driving of the main body in the forward diagonal direction is completed. Accordingly, the main body may subsequently move to the third specific point, namely an adjacent other specific point.

The pattern driving may mean that the main body repeatedly moves perpendicular to the diagonal direction (central axis direction) joining two specific points. Of course, the main body may be driven at various angles such as an angle of 85 degrees and an angle of 80 degrees, instead of the vertical angle.

In general, the main body 10 may perform operation in the operation region while moving to finally form a mesh pattern with respect to the operation region.

Meanwhile, the main body 10 may be driven in a constant direction until reaching the boundary wire 110 during driving of the main body 10 in the zigzag direction. As shown in FIG. 5, when the main body 10 is not moved any longer in a relevant direction due to reaching the boundary wire 110, movement of the main body 10 in the relevant zigzag direction stops.

When the main body 10 moves in one direction during driving thereof in the zigzag direction and reaches the boundary wire 110, the main body may be driven in the diagonal direction and then driven in a reverse zigzag direction.

Meanwhile, a distance in the zigzag direction may be similar to or less than a diameter of the cutting portion 50 of the main body 10. That is, the main body 10 may move while scanning the overall operation region during driving thereof in the zigzag direction.

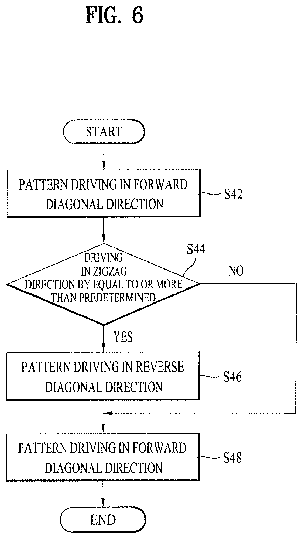

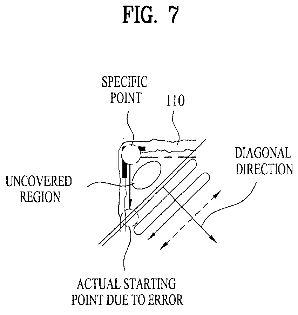

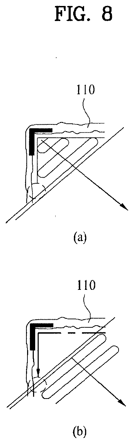

FIG. 6 is a flowchart for explaining a correction process on determination of the specific point. FIGs. 7 and 8 are views for explaining realization of the correction process in FIG. 6. Hereinafter, a description will be given with reference to FIGs. 6 to 8.

When the controller 20 allows the drive portion 40 to move to a specific point, an error in movement to the specific point may occur due to many reasons such as slip of the wheel. That is, even though the main body 10 is not actually moved to the specific point, it may be possible to cause an error of a state in which the main body moves to the specific point.

For example, it may be possible to cause an error of the main body 10 being located at a specific point in a state of being arranged at a position as shown in FIG. 7.

In this case, the main body 10 begins pattern driving in the forward diagonal direction (S42).

It may be determined whether the main body 10 moves by equal to or more than a predetermined distance when initially moving in the zigzag direction (S44).

In this case, the predetermined distance may be approximately 50 cm. Since the operation region does not form an accurate quadrangle, the operation region may be changed as various values due to properties thereof by a user or operator.

When the main body initially moves in the zigzag direction by equal to or more than a predetermined distance, it is determined that the main body does not begin to be driven from the specific point and the main body may perform pattern driving in the reverse diagonal direction as shown in FIG. 8(a) (S46). In this case, the driving of the main body 10 in the reverse diagonal direction may begin from an erroneous specific position in FIG. 7.

To this end, the main body 10 may be driven reversely to the trajectory of the zigzag direction in step S42 and may be returned to the relevant position.

When the main body 10 moves in the reverse diagonal direction and reaches an actual specific point, the main body 10 stops without movement thereof in the zigzag direction. This is because a movement width in the zigzag direction is narrowed at the position of the actual specific point.

When the main body 10 reaches a specific point, the main body 10 may again move to the erroneous specific point in step S42. In this case, although the main body may be driven in a reverse zigzag direction; the controller 20 may allow the main body to move to the erroneous specific point by establishing a map relative to the relevant trajectory.

Meanwhile, after the main body 10 moves to the specific point determined in step S42, the main body 10 may perform pattern driving in the forward diagonal direction (S48).

Next, the pattern driving of the main body 10 in the zigzag form which is performed in the diagonal direction as the central axis is completed after the main body 10 reaches a new specific point, the main body 10 may move to the other specific point.

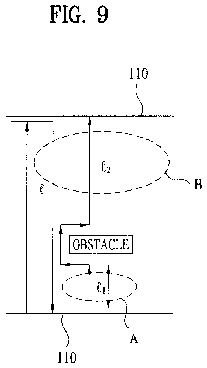

FIG. 9 is a view for explaining an obstacle avoidance driving method. Hereinafter, a description will be given with reference to FIG. 9.

An obstacle which should not be cut by the cutting portion 50 may be located within the operation region defined by the boundary wire 110. For example, the obstacle may be a tree planted in a yard.

In this case, the main body 10 may meet with the obstacle while being driven in the zigzag form in the diagonal direction as the central axis.

A distance 1 by which the main body 10 previously moves in the zigzag direction may be compared with a distance 11 by which the main body 10 moves in the zigzag direction immediately before meeting with the obstacle.

If it is determined that the distance 11 is less than half of the distance, it may be possible to instruct the main body 10 to perform pattern driving with respect to an operation region defined by reference numeral 12 as shown in FIG. 9. That is, the main body 10 may be guided to perform pattern driving with respect to a B region having a relatively longer distance when the main body 10 moves in the zigzag direction, among A and B regions divided on the basis of the obstacle.

In this case, a reference of the A or B region selected by the main body 10 is a region having a long driving distance on the basis of the obstacle. The selected region is a region having a relative larger area, and the main body 10 may be guided within the larger region and perform operation with respect to the larger region.

In this case, it may be determined whether or not the driving distance is long by a ratio between the distance 1 by which the main body previously moves in the zigzag direction and the distance 11 by which the main body currently moves in the zigzag direction.

In accordance with the present invention, since a main body of a lawn mower robot is efficiently driven in an overall region, it may be possible to reduce a region in which the main body is not finally driven.

In addition, it may be possible to reduce a position recognition error of the region and reduce a non-driving region of the main body even though the main body is not driven based on a map using an external sensor.

In addition, since the main body is driven while forming a mesh pattern, it may be possible to efficiently cover an overall region.

In addition, a specific point is generated so that the specific point is utilized as a starting point at which the robot stably forms the mesh pattern to manage and control the same.

In addition, it may be possible to reduce a region in which the main body is not driven within the overall region even without more accurate coordinate information than map information in the region.

It will be apparent to those skilled in the art that various modifications and variations can be made in the present invention without departing from the scope of the inventions.

## Claims

1. A method of controlling a lawn mower robot having a main body (10), comprising:
acquiring coordinate information of a boundary indication unit (100, 110) defining an operation region;
deriving an imaginary quadrangle having four vertices and including the operation region;
determining four coordinate points of the boundary indication unit (100, 110) each of which is close to a respective one of the four vertices of the imaginary quadrangle as four specific points;
directing the main body (10) of the lawn mower robot to drive inside the operation region through first pattern driving after beginning from any one of the four specific points,
after completing first pattern driving from one of the four specific points to another point of the four specific points, directing the main body (10) of the lawn mower robot to move to an other one of the four specific points, and to perform a further pattern driving from the other one of the four specific points.

2. The method of controlling a lawn mower robot according to claim 1, wherein the first pattern driving is different from the further pattern driving.

3. The method of controlling a lawn mower robot according to claim 1 or 2, wherein a central axis in a zigzag path of the first pattern driving is different from a central axis in a zigzag path of the further pattern driving.

4. The method according to any one of claims 1 to 3, wherein the main body (10) moves to the other one of the four specific points along the boundary indication unit (100, 110).

5. The method according to claims 3 or 4, wherein the main body (10) is driven in a constant direction of a part of the zigzag path until reaching the boundary indication unit (100, 110), during driving of the main body (10) in the zigzag path.

6. The method according to claim 5, wherein when the main body (10) moves in one direction during driving thereof on the part of a zigzag path and reaches the boundary indication unit (100, 110), the main body (10) moves to the other one of the four specific points along the boundary indication unit (100, 110).

7. The method according to any of claims 1 to 6, wherein the acquiring coordinate information comprises acquiring coordinate information of the boundary indication unit (100, 110) while the main body (10) is driven along the boundary indication unit (100, 110).

8. The method according to claim any one of claims 1 to 7, wherein the imaginary quadrangle is a rectangle.

9. The method according to any of claims 1 to 8, wherein the directing the main body (10) of the lawn mower robot to drive inside the operation region comprises directing the main body (10) of the lawn mower robot to move to another point of the four specific points along the boundary indication unit (100, 110) and then begin the pattern driving from the other point of the four specific points.

10. A lawn mower robot being configured to be operated in an operation region defined by a boundary indication unit (100, 110), comprising:
a main body (10) configured for moving inside the operation region defined by the boundary indication unit,
wherein the main body (10) comprises:
a sensing portion which is configured to sense the boundary of the operation region;
a drive portion which is configured to drive the robot to move along the boundary indication unit (100, 110) and then realize pattern driving; and
a controller (20); the robot being **characterized in that** the controller is configured to:
derive an imaginary quadrangle including the operation region by means of using coordinate information of the boundary indication unit (100, 110) acquired by the movement made by the drive portion,
determine coordinate points of the boundary respectively close to four vertices of the quadrangle as four specific points,
direct the drive portion to perform first pattern driving by selecting any one of the four specific points, and
after completing the first pattern driving from one of the four specific points to another point of the four specific points, direct the main body (10) of the lawn mower robot to move to another one of the four specific points, and to perform a further pattern driving from the other one of the four specific points.

## Patentansprüche

1. Verfahren zum Steuern eines Rasenmähroboters, der einen Hauptkörper (10) aufweist, das aufweist:
Erfassen von Koordinateninformationen einer Begrenzungsanzeigeeinheit (100, 110), die einen Arbeitsbereich definieren;
Ableiten eines imaginären Vierecks, das vier Eckpunkte aufweist und den Arbeitsbereich einschließt;
Bestimmen von vier Koordinatenpunkten der Begrenzungsanzeigeeinheit (100, 110), von denen jeder nahe einem jeweiligen der vier Eckpunkte des imaginären Vierecks ist, als vier spezifische Punkte;
Anleiten des Hauptkörpers (10) des Rasenmähroboters, innerhalb des Arbeitsbereichs durch eine erste Musterfahrt zu fahren, nachdem er von irgendeinem der vier spezifischen Punkte startet,
nach dem Beenden der ersten Musterfahrt von einem der vier spezifischen Punkte zu einem anderen Punkt der vier spezifischen Punkte, Anleiten des Hauptkörpers (10) des Rasenmähroboters, sich zu einem anderen der vier spezifischen Punkte zu bewegen und eine weitere Musterfahrt von dem anderen der vier spezifischen Punkte durchzuführen.

2. Verfahren zum Steuern eines Rasenmähroboters nach Anspruch 1, wobei sich die erste Musterfahrt von der weiteren Musterfahrt unterscheidet.

3. Verfahren zum Steuern eines Rasenmähroboters nach Anspruch 1 oder 2, wobei sich eine Mittelachse in einem Zickzackweg der ersten Musterfahrt von einer Mittelachse in einem Zickzackweg der weiteren Musterfahrt unterscheidet.

4. Verfahren nach einem der Ansprüche 1 bis 3, wobei sich der Hauptkörper (10) entlang der Begrenzungsanzeigeeinheit (100, 110) zu dem anderen der vier spezifischen Punkte bewegt.

5. Verfahren nach Anspruchs 3 oder 4, wobei während der Fahrt des Hauptkörpers (10) auf dem Zickzackweg der Hauptkörper (10) in einer konstanten Richtung eines Teils des Zickzackwegs gefahren wird, bis er die Begrenzungsanzeigeeinheit (100, 110) erreicht.

6. Verfahren nach Anspruch 5, wobei, wenn sich der Hauptkörper (10) während dessen Fahrt auf dem Teil eines Zickzackweg in einer Richtung bewegt und die Begrenzungsanzeigeeinheit (100, 110) erreicht, sich der Hauptkörper (10) entlang der Begrenzungsanzeigeeinheit (100, 110) zum anderen der vier spezifischen Punkte bewegt.

7. Verfahren nach einem der Ansprüche 1 bis 6, wobei das Erfassen von Koordinateninformation das Erfassen von Koordinateninformation der Begrenzungsanzeigeeinheit (100, 110) aufweist, während der Hauptkörper (10) entlang der Begrenzungsanzeigeeinheit (100, 110) gefahren wird.

8. Verfahren nach einem der Ansprüche 1 bis 7, wobei das imaginäre Viereck ein Rechteck ist.

9. Verfahren nach einem der Ansprüche 1 bis 8, wobei das Anleiten des Hauptkörpers (10) des Rasenmähroboters, innerhalb des Arbeitsbereichs zu fahren, das Anleiten des Hauptkörpers (10) des Rasenmähroboters aufweist, sich zu einem anderen Punkt der vier spezifischen Punkte entlang der Begrenzungsanzeigeeinheit (100, 110) zu bewegen und dann die Musterfahrt vom anderen Punkt der vier spezifischen Punkte aus zu starten.

10. Rasenmähroboter, der konfiguriert ist, in einem Arbeitsbereich betrieben zu werden, der durch eine Begrenzungsanzeigeeinheit (100, 110) definiert ist, der aufweist:
einen Hauptkörper (10), der zur Bewegung innerhalb des Arbeitsbereichs konfiguriert ist, der durch die Begrenzungsanzeigeeinheit definiert ist,
wobei der Hauptkörper (10) aufweist:
einen Abtastabschnitt, der konfiguriert ist, die Begrenzung des Arbeitsbereichs abzutasten;
einen Antriebsabschnitt, der konfiguriert ist, den Roboter zu anzutreiben, sich entlang der Begrenzungsanzeigeeinheit (100, 110) zu bewegen und dann eine Musterfahrt durchzuführen; und
eine Steuereinrichtung (20);
wobei der Roboter **dadurch gekennzeichnet** ist, das die Steuereinrichtung konfiguriert ist:
ein imaginäres Viereck, das den Arbeitsbereich einschließt, mittels der Verwendung von Koordinateninformation der Begrenzungsanzeigeeinheit (100, 110) abzuleiten, die durch die Bewegung erfasst werden, die durch den Antriebsabschnitt durchgeführt wird,
Koordinatenpunkte der Begrenzung, die jeweils nahe zu vier Eckpunkten des Vierecks sind, als vier spezifische Punkte zu bestimmen,
den Antriebsabschnitt anzuleiten, eine erste Musterfahrt durchzuführen, indem irgendeiner der vier spezifischen Punkte ausgewählt wird, und
nach dem Beenden der ersten Musterfahrt von einem der vier spezifischen Punkte zu einem anderen Punkt der vier spezifischen Punkte, den Hauptkörper (10) des Rasenmähroboters anzuleiten, sich zu einem anderen der vier spezifischen Punkte zu bewegen und eine weitere Musterfahrt von dem anderen der vier spezifischen Punkte durchzuführen.

## Revendications

1. Procédé de commande d'une tondeuse à gazon robotisée présentant un corps principal (10), comprenant :
l'acquisition d'informations de coordonnées d'une unité d'indication de limite (100, 110) définissant une zone de fonctionnement ;
la déduction d'un quadrilatère imaginaire à quatre sommets comprenant la zone de fonctionnement ;
la détermination, en tant que quatre points spécifiques, de quatre points de coordonnées de l'unité d'indication de limite (100, 110), chacun d'entre eux étant proche d'un des quatre sommets du quadrilatère imaginaire ;
le guidage du corps principal (10) de tondeuse à gazon robotisée pour être conduit à l'intérieur de la zone de fonctionnement par un premier modèle de guidage après démarrage depuis l'un quelconque des quatre points spécifiques,
après application du premier modèle de guidage depuis un des quatre points spécifiques vers un autre des quatre points spécifiques, le guidage du corps principal (10) de la tondeuse à gazon robotisée pour être conduit vers un autre des quatre points spécifiques,
et pour appliquer un autre modèle de guidage à partir de l'autre des quatre points spécifiques.

2. Procédé de commande d'une tondeuse à gazon robotisée selon la revendication 1, où le premier modèle de guidage est différent de l'autre modèle de guidage.

3. Procédé de commande d'une tondeuse à gazon robotisée selon la revendication 1 ou la revendication 2, où un axe central dans un chemin en zigzag du premier modèle de guidage est différent d'un axe central dans un chemin en zigzag de l'autre modèle de guidage.

4. Procédé selon l'une des revendications 1 à 3, où le corps principal (10) se déplace vers l'autre des quatre points spécifiques le long de l'unité d'indication de limite (100, 110).

5. Procédé selon la revendication 3 ou la revendication 4, où le corps principal (10) est guidé dans une direction constante d'une partie du chemin en zigzag jusqu'à ce qu'il atteigne l'unité d'indication de limite (100, 110) pendant le guidage du corps principal (10) dans le chemin en zigzag.

6. Procédé selon la revendication 5, où, quand le corps principal (10) se déplace dans une direction pendant son guidage sur la partie d'un chemin en zigzag et atteint l'unité d'indication de limite (100, 110), le corps principal (10) se déplace vers l'autre des quatre points spécifiques le long de l'unité d'indication de limite (100, 110).

7. Procédé selon l'une des revendications 1 à 6, où l'acquisition d'informations de coordonnées comprend l'acquisition d'informations de coordonnées de l'unité d'indication de limite (100, 110) pendant que le corps principal (10) est guidé le long de l'unité d'indication de limite (100, 110).

8. Procédé selon l'une des revendications 1 à 7, où le quadrilatère imaginaire est un rectangle.

9. Procédé selon l'une des revendications 1 à 8, où le guidage du corps principal (10) de la tondeuse à gazon robotisée pour être conduit à l'intérieur de la zone de fonctionnement comprend le guidage du corps principal (10) de la tondeuse à gazon robotisée pour déplacer celui-ci vers un autre des quatre points spécifiques le long de l'unité d'indication de limite (100, 110), puis le déclenchement du modèle de guidage à partir de l'autre des quatre points spécifiques.

10. Tondeuse à gazon robotisée, prévue pour être mise en service dans une zone de fonctionnement définie par une unité d'indication de limite (100, 110), comprenant :
un corps principal (10) prévu pour se déplacer à l'intérieur de la zone de fonctionnement définie par l'unité d'indication de limite,
ledit corps principal (10) comprenant :
une section de détection prévue pour détecter la limite de la zone de fonctionnement ;
une section de guidage prévue pour guider le déplacement du robot le long de l'unité d'indication de limite (100, 110) puis pour réaliser le modèle de guidage ; et
un dispositif de commande (20) ;
le robot étant **caractérisé en ce que** le dispositif de commande est prévu pour :
déduire un quadrilatère imaginaire comprenant la zone de fonctionnement au moyen d'informations de coordonnées de l'unité d'indication de limite (100, 110) acquises par le déplacement effectué par la section de guidage,
déterminer en tant que quatre points spécifiques des points de coordonnées de la limite proches de quatre sommets du quadrilatère,
guider la section de guidage pour appliquer un premier modèle de guidage par sélection de l'un quelconque des quatre points spécifiques, et
après application du premier modèle de guidage depuis un des quatre points spécifiques vers un autre des quatre points spécifiques, guider le corps principal (10) de la tondeuse à gazon robotisée pour être conduit vers un autre des quatre points spécifiques, et pour appliquer un autre modèle de guidage à partir de l'autre des quatre points spécifiques.
